(19) **Europäisches Patentamt**
**European Patent Office**
**Office européen des brevets**

(11) **EP 2 515 461 B1**

(12) **EUROPEAN PATENT SPECIFICATION**

(45) Date of publication and mention
of the grant of the patent:
**30.01.2019  Bulletin 2019/05**

(51) Int Cl.:
**H04B 1/7105** $^{(2011.01)}$     **H04J 11/00** $^{(2006.01)}$
**H04J 13/20** $^{(2011.01)}$

(21) Application number: **12177274.3**

(22) Date of filing: **26.10.2009**

(54) **ROOT SPREADING CODE BASED ASSIGNMENT FOR HSDPA**

Auf Root-Spreicodes basierende Zuweisung für HSDPA

Affectation pour HSDPA basée sur des codes d'étalement racines

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **29.10.2008  US 260641**

(43) Date of publication of application:
**24.10.2012  Bulletin 2012/43**

(62) Document number(s) of the earlier application(s) in
accordance with Art. 76 EPC:
**09774702.6 / 2 351 273**

(73) Proprietor: **Telefonaktiebolaget LM Ericsson
(publ)
164 83 Stockholm (SE)**

(72) Inventors:
- **Wang, Yi-Pin Eric
Fremont, CA California 94539 (US)**
- **Bottomley, Gregory E.
Cary, NC North Carolina 27518 (US)**

(74) Representative: **Brann AB
P.O. Box 3690
Drottninggatan 27
103 59 Stockholm (SE)**

(56) References cited:
**WO-A1-2006/105333     WO-A2-2004/010591
US-A1- 2006 251 156**

- **BOTTOMLEY G E: "Block Equalization and
Generalized MLSE Arbitration for the HSPA
WCDMA Uplink", VEHICULAR TECHNOLOGY
CONFERENCE, 2008. VTC 2008-FALL. IEEE
68TH, IEEE, PISCATAWAY, NJ, USA, 21
September 2008 (2008-09-21), pages 1-5,
XP031352360, ISBN: 978-1-4244-1721-6**
- **CHENG R-G ET AL: "OVSF CODE CHANNEL
ASSIGNMENT FOR IMT-2000", VTC
2000-SPRING. 2000 IEEE 51ST. VEHICULAR
TECHNOLOGY CONFERENCE PROCEEDINGS.
TOKYO, JAPAN, MAY 15-18, 2000; [IEEE
VEHICULAR TECHNOLGY CONFERENCE], NEW
YORK, NY : IEEE, US, vol. 3, 15 May 2000
(2000-05-15), pages 2188-2192, XP000968392,
ISBN: 978-0-7803-5719-8**

**Description**

**TECHNICAL FIELD**

The present invention relates in general to the wireless telecommunications field and, in particular, to a base station that uses a root spreading code based code assignment to transmit signals to a mobile station. The mobile station can then suppress intra-block interference by effectively using a joint detection technique or a non-linear equalization technique to detect the transmitted symbols.

**BACKGROUND**

The following abbreviations are herewith defined, at least some of which are referred to within the following description of the prior art and the present invention.

| | |
|---|---|
| BDFE | Block Decision Feedback Equalizer |
| BER | Bit Error Rate |
| CDMA | Code-Division Multiple Access |
| CPICH | Common Pilot Channel |
| CRC | Cyclic Redundancy Check |
| FEC | Forward Error Correction |
| G-Rake | Generalized Rake Receiver |
| HSDPA | High-Speed Downlink Packet Access |
| HS-SCCH | High-Speed Shared Control Channel |
| ISI | Intersymbol Interference |
| JD | Joint Detection |
| MMSE | Minimum Mean-Square Error |
| MIMO | Multiple-Input-Multiple-Output |
| OVSF | Orthogonal Variable Spreading Factor |
| QAM | Quadrature Amplitude Modulation |
| SF | Spreading Factor |
| SIC | Successive Interference Cancellation |
| TDM | Time-Division Multiplexing |
| TTI | Transmission Time Interval |
| UE | User Equipment |
| WCDMA | Wideband Code-Division Multiple Access |

Today there is a high level of interest in improving the reception performance of mobile stations configured for third generation cellular systems which implement the HSDPA provision of the WCDMA standard. These mobile stations commonly use linear equalization such as, for example, G-Rake and MMSE chip equalization to improve the reception performance. In such approaches, the mobile station models the interference as colored noise and interference suppression is then achieved through exploiting spatial and temporal correlation of the interference. The mobile station's use of linear equalization to suppress interference has worked well in the past with HSDPA.

However, HSDPA has evolved since its introduction and continues to evolve to support higher and higher order modulations and MIMO. For instance, the current technical specification "3rd Generation Partnership Project: Technical Specification Group Radio Access Network; Spreading and Modulation (FDD)(Release 7)" 3GPP TS 25.213 version 7.3, Sept., 2007 has standardized 64-QAM for single stream (non-MIMO) transmissions. Plus, it is expected that in release 8, 64-QAM will also be standardized for MIMO transmissions as well. Thus, as the standards move towards higher and higher bit rates, the mobile terminals use of linear equalization will gradually reach a performance bottleneck, resulting in a larger and larger gap from the so-called matched filter bound, which is the theoretical performance upper bound (or bit error rate lower bound) that can not be exceeded. Accordingly, there is a need to address this problem and other problems associated with the higher bit rates of current and future HSDPA. This problem and other problems are satisfied by the present invention.

Cheng R-G et al.: "OVSF Code Channel Assignment for IMT-2000" VTC 2000-Spring, 2000 IEEE 51st. Vehicular Technology Conference Proceedings, Tokyo, Japan, May 15-18, 2000 ; [IEEE Vehicular Technology Conference], New York, NY : IEEE, US, vol. 3, 15 May 2000, pages 2188-2192 discloses a base station that implements a code channel assignment method that supports as many users as possible with less complexity.

WO 2004/010591 A2 shows a system and methods for orthogonal variable spreading factor (OVSF) code assignment, de-allocation and code tree pruning, also includes OVSF code identification and storage schemes, and shows embodiments for code tree pruning, code assignment and de-allocation.

WO 2006/105333 A1 further considers a wireless network with HSDPA-enabled user equipment devices, wherein a base transceiver station transmits to each HSDPA-enabled UE information regarding allocation of HSDPA codes and associated modulation techniques for other HSDPA-enabled UEs. Using this additional control information, each UE configures decision feedback filter of its equalizer to reduce inter-user interference.

US 2006/0251156 A1 shows a wireless communication receiver that improves signal impairment correlation estimation in MIMO/MISO systems by considering different transmit power allocations and different transmit antenna power distributions in its impairment correlation calculations. The receiver may be implemented in according to a variety of architectures, including, but not limited to, Successive Interference Cancellation (SIC) Generalized RAKE (G-RAKE), Joint Detection (JD) G-RAKE, and Minimum Mean Squared Error (MMSE) G-RAKE. Regardless of the particular receiver architecture adopted, the improved impairment correlations may be used to calculate improved (RAKE) signal combining weights and/or improve channel quality estimates for reporting by receivers operating in Wideband CDMA (W-CDMA) systems transmitting HSDPA channels via MIMO or MISO transmitters. Further, a transmitter may be configured to facilitate impairment correlation determinations by wireless communication receivers operating in MIMO/MISO environments, by signaling one or more values, e.g., data-to-pilot signal transmit power ratios and/or transmit antenna power distributions for the data and pilot signals.

## SUMMARY

In one aspect, the present invention provides a receiver comprising: one or more processors to: receive a signal on a control channel from a high-speed downlink packet access transmitter, where the signal indicates a code allocation which is to be used to interact with the high-speed downlink packet access transmitter; receive baseband samples originated by the high-speed downlink packet access transmitter; and further characterized to: use a root code to detect the baseband samples received from the high-speed downlink packet access transmitter, if all descendant codes of the root code are allocated according to the received signal on the control channel.

In another aspect, the present invention provides a method for detecting symbols, said method comprising the steps of: receiving a signal on a control channel from a high-speed downlink packet access transmitter, where the signal indicates a code allocation which is to be used to interact with the base station; receiving baseband samples corresponding to a signal originated by the high-speed downlink packet access transmitter; and further characterized by: using a root code to detect the symbols received from the high-speed down link packet access transmitter, if all descendant codes of the root code are allocated according to the received signal on the control channel.

In still yet another aspect, the present invention provides a high-speed downlink packet access transmitter that uses a root spreading code based code assignment to transmit signals to a receiver, the transmitter comprising: one or more processors configured to: determine whether using root codes is possible based on particular capabilities of the receiver; checking if all descendants of a root code are assigned to said receiver; and replacing multiple codes of higher spreading factor descendants with one or more root codes of lower spreading factor descendants, and a method for transmitting symbols to a receiver, said method comprising the steps of: determining whether using root codes is possible based on particular capabilities of the receiver; checking if all descendants of a root code are assigned to said receiver; and replacing multiple codes of higher spreading factor descendants with one or more root codes of lower spreading factor descendants.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

## BRIEF DESCRIPTION OF THE DRAWINGS

A more complete understanding of the present invention may be obtained by reference to the following detailed description when taken in conjunction with the accompanying drawings:

FIGURE 1 (PRIOR ART) is a diagram of a communications network including a conventional base station that communicates with a conventional mobile station utilizing a traditional HSDPA transmission;
FIGURE 2 (PRIOR ART) is a diagram illustrating in greater detail how the conventional base station of FIGURE 1 generates the traditional HSDPA transmission that is transmitted to the conventional mobile station;
FIGURE 3 (PRIOR ART) is a diagram illustrating in greater detail how the conventional mobile station of FIGURE 1 uses a linear equalization technique to detect symbols in the traditional HSDPA transmission which was received from the conventional base station;
FIGURE 4 is a diagram illustrating a communications network including a base station that utilizes a root spreading codes based code assignment technique to serve a mobile station in accordance with an embodiment of the present invention;

FIGURE 5 is a diagram illustrating a communications network including a base station that communicates with the mobile station utilizing an exemplary HSDPA transmission in accordance with an embodiment of the present invention;

FIGURE 6 is a diagram illustrating in greater detail the mobile station shown in FIGURE 5 where the mobile station has a BDFE-JD receiver that suppresses intra-block interference by jointly detecting symbols within a symbol block received within the exemplary HSDPA transmission signal in accordance with an embodiment of the present invention;

FIGURES 7 and 8 are graphs indicating the results of simulation tests that where conducted to confirm the benefit of having the base station implement a root spreading codes based code assignment technique and a mobile station implement a joint detection technique in accordance with an embodiment of the present invention;

FIGURE 9 is a diagram of a communications network where a base station uses 3 codes of SF 4 and 3 codes of SF 16 in an exemplary HSDPA transmission which is transmitted to a mobile station in accordance with another embodiment of the present invention; and

FIGURE 10 is a diagram of a communications network where the base station forms separate codewords by having short symbols (SF 4) form codeword 1 and long symbols (SF16) form codeword 2 which are part of an exemplary HSDPA transmission that is transmitted to the mobile station in accordance with another embodiment of the present invention.

## DETAILED DESCRIPTION

In the following description, a brief discussion about a conventional HSDPA base station and a conventional HSDPA mobile station is provided first and then a detailed discussion is provided to describe details that enable a thorough understanding about several exemplary embodiments of the base station (and corresponding method) and the mobile station (and corresponding method) of the present invention. However, it will be apparent to one having ordinary skill in the art and having had the benefit of the present disclosure that the present invention may be practiced in other embodiments that depart from the specific details disclosed herein. Moreover, it will be apparent to one having ordinary skill in the art that the descriptions of the new base station and the new mobile station (of which there can be any number in a communications network) will omit well-known components so as not to obscure the description of the present invention.

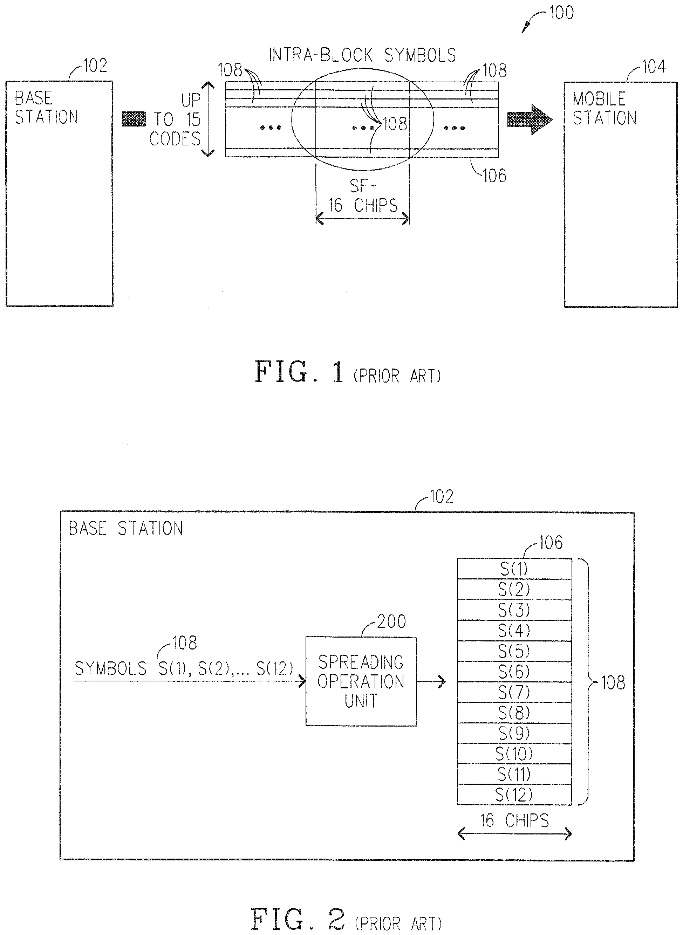

Referring to FIGURE 1 (PRIOR ART), there is illustrated a communications network 100 including a conventional base station 102 that communicates with a conventional mobile station 104 utilizing a traditional HSDPA transmission 106. As shown, the traditional HSDPA transmission 106 has SF 16 and up to 15 channelization codes which enable the high-data-rate transmission of multiple symbols 108. Even though there are 16 codes available at SF 16, the base station 102 normally does not use all 16 codes since part of the first one sixteenth branch of the code tree is used to signal CPICH and other common control channels. As a result, HSDPA is limited to using up to 15 codes at SF 16. Circuit-switch traffic may further consume more code branches, which leaves less than 15 SF 16 codes available for HSDPA communications in some cases. As further illustrated by the example in FIGURE 2 (PRIOR ART), the base station 102 has a spreading operation unit 200 that receives 12 symbols $s(1)$, $s(2)$...$s(12)$ and outputs 16 chips when 12 of the possible 15 spreading codes have been allocated to the mobile station 104. In this case, the base station 102 spreads the 12 symbols $s(1)$, $s(2)$ ... $s(12)$ such that each symbol is spread by a length-16 spreading sequence, and all of the symbols $s(1)$, $s(2)$...$s(12)$ are transmitted in parallel utilizing code-division multiplexing which form the HSPDA transmission 106. As a result of this particular type of transmission scheme, the mobile station 104 would typically employ a linear equalization receiver as described below to detect the symbols 108 located in the HSDPA transmission 106.

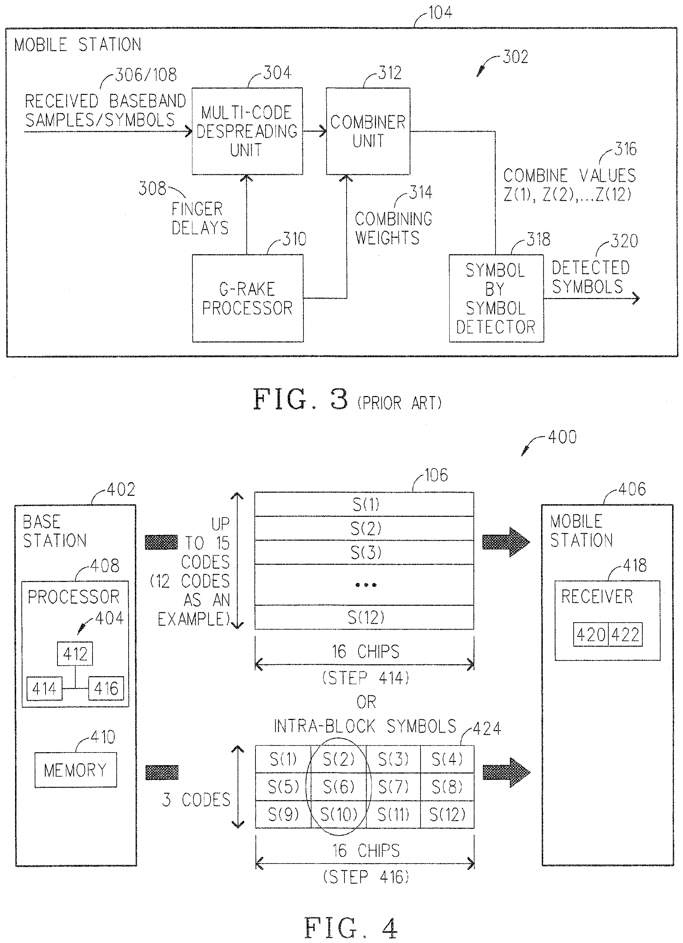

Referring to FIGURE 3 (PRIOR ART), there is shown a block diagram illustrating a mobile station 104 that has an exemplary linear equalization receiver 302 which could be used to detect the symbols 108 that are located in the HSDPA transmission 106. The linear equalization receiver 302 has a multi-code despreading unit 304 that correlates received baseband samples 306 (corresponding to HSDPA transmission 106) with spreading codes using a set of finger delays 308 which are supplied by a G-Rake processor 310. This produces one despread value per finger delay and per spreading code which are then combined within a combiner unit 312 using combining weights 314 supplied by the G-Rake processor 310. In particular, for each spreading code, a set of despread values are combined by the combiner unit 312 to produce a combined value per symbol period per code . Thus, if 12 symbols are transmitted in parallel within the HSDPA transmission 106, then the combiner unit 312 produces 12 combined values $z(1)$, $z(2)$...$z(12)$ 316. A symbol-by-symbol detector 318 then detects each of the 12 combined values $z(1)$, $z(2)$...$z(12)$ 316 on a symbol-by-symbol basis and outputs the detected symbols or related information (e.g. soft bit values) 320. As discussed above, the base station 102 (utilizing the HSDPA transmission 106) and the mobile station 104 (utilizing the linear equalization scheme) work well with the relatively lower bit rates but they do not work well with higher bit rates like, for example, 64-QAM MIMO transmissions or when the mobile station 104 is limited by self interference (i.e. interference within the block of symbols 108).

The inventors in solving this problem propose several exemplary embodiments of a base station and a mobile station that work well with higher bits rates like, for example, 64-QAM MIMO transmissions or when the mobile station 104 is limited by self interference. In particular, the inventors believe that further performance enhancement can be achieved by nonlinear processing techniques, e.g., decision feedback equalization and/or joint detection, at the mobile station. The complexity of joint detection is however enormous when there are a large number of symbols in a symbol block. With the example of FIGURE 2, joint detection at the mobile station 104 is practically impossible for higher order modulations such as 16QAM and 64QAM. For example, with 16QAM, there are $16^{12}$ joint hypotheses, which require computation resources far beyond what is available in a mobile station today. Thus, in order to further improve performance, the base station should use a root spreading codes based code assignment technique which enables the mobile station to effectively use a nonlinear processing technique, e.g. joint detection, when detecting the received signals. This is desirable in many high bit rate scenarios such as when the mobile station is close to the base station during which the radio channels are mildly dispersive and the mobile station's receiver performance is very much limited by overlapping symbols that are transmitted in the same symbol period. Thus, the mobile terminal could have significant improvement beyond the traditional linear equalization by jointly detecting the multiple symbols carried by the parallel channelization codes in the same symbol period. The proposed invention requires the base station to use the root spreading codes based code assignment technique to reduce the number of overlapping symbols carried in the signal transmitted to the mobile terminal. A detailed discussion to explain how all of this can be accomplished and enabled is provided next with respect to FIGURES 4-10.

Referring to FIGURE 4, there is illustrated a communications network 400 including a base station 402 that utilizes a root spreading codes based code assignment method 404 when communicating with a mobile station 406 in accordance with an embodiment of the present invention. In this embodiment, the base station 402 has a pool of up to 15 SF 16 codes available to serve the mobile station 406 and also has one or more processors 408 and possibly memory 410 (storage 410) that may include processor-executable instructions where the one or more processors 408 is adapted to interface with the memory 410 and uses hardware or executes the processor-executable instructions to implement the root spreading codes based code assignment method 404 (note: the one or more processors 408 and the possible memory 410 are implemented, at least partially, as some combination of software, firmware, hardware, or hard-coded logic). The root spreading codes based code assignment method 404 works as follows for an example where only root codes of a single SF are allowed. The base station 402 checks whether a root code has all of its SF 16 descendants (higher spreading factor descendants) assigned to the mobile station 406 (step 412). If no, then the base station 402 uses the SF 16 descendants to transmit symbols to the mobile station 406(step 414). If yes, then the base station 402 instead of using the SF 16 descendants, uses the root code to transmit the symbols to the mobile station 406 (step 416). For example, a root code of SF 4 has 4 descendants of SF 16. If all 4 of these SF 16 codes are assigned to the mobile station 406, then the base station 402 uses the root code of SF 4 instead. Thus, instead of sending 4 symbols using CDM of 4 codes, 4 symbols are sent using TDM. The process is repeated for each root code. The method 404 is desirable since it reduces the number of overlapping symbols, and thus enables the mobile station 406 to use nonlinear equalization or joint detection to detect the received symbols.

The base station 402 could determine whether using the root codes is possible in the first place based on the particular capabilities of the mobile station 406 (e.g., UE 406. For example, if the mobile station 406 has a receiver 418 with a non-linear equalizer unit 420, a joint-detection unit 422 and/or conforms to the new HSDPA releases where the present invention is supported, then the base station 402 during steps 412 and 414 takes multiple codes with SF 16 and reduces them to a single root code with a lower SF to transmit signals 424 to the mobile station 406. To illustrate how multiple codes with a higher SF can be reduced to a single code at a lower SF, consider the following example:

$$x= [1 \ 1 \ -1 \ -1 \ 1 \ 1 \ -1 \ -1]$$
$$y= [1 \ 1 \ -1 \ -1 \ -1 \ -1 \ 1 \ 1].$$

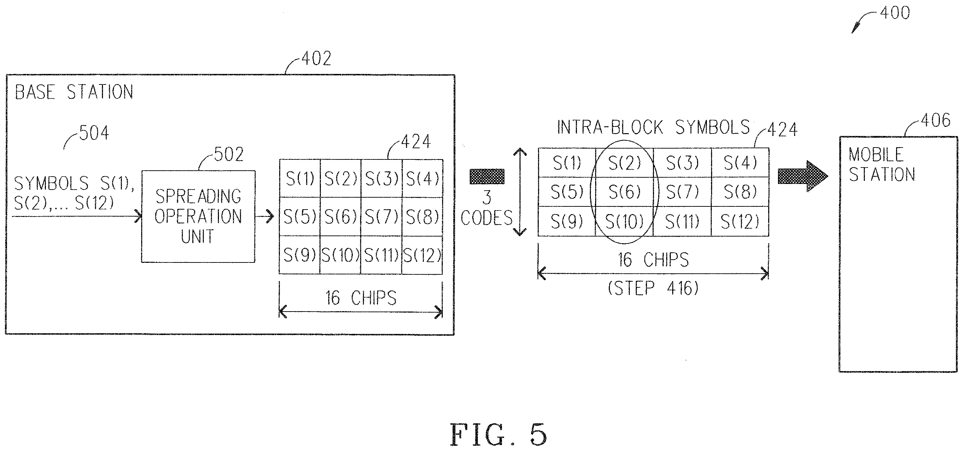

The length-8 sequences x and y are Hadamard sequences where they share a basic length-4 pattern of z= [1 1 -1 -1]. Thus, x= [z z] and y=[z, -z]. Sequence z is referred to as the root of sequences x and y at SF 4. Instead of modulating a symbol each on x and y through code-division multiplexing, the base station 402 can modulate a symbol on z in the first 4-chip interval and another symbol on z in the 2nd 4-chip interval (i.e. time-division multiplexing). The latter approach reduces the number of overlapping symbols in the transmitted signal 424 which enables the mobile station 406 to effectively use a nonlinear processing technique, e.g. a joint detection, when detecting the received HSDPA signals 424. The latter approach also reduces peak-to-average power ratio, which is an important practical aspect of transmission. Another example of how the base station 402 can use root codes to transmit HSDPA signals 424 to the mobile station 406 is discussed in detail next with respect to FIGURES 5-8.

Referring to FIGURE 5, there is illustrated a communications network 400 including the base station 402 that communicates with the mobile station 406 utilizing an exemplary HSDPA transmission 424 in accordance with an embodiment of the present invention. In this example, the base station 402 replaces the conventional 12 codes of SF 16 transmission 106 used to serve the mobile station 406 with 3 codes of SF 4 transmission 424 if the 12 codes are from the same SF 4 root and then transmits the 3 SF 4 transmission 424 to the mobile station 406 (see FIGURE 4). In particular, the base station 402 has a spreading operation unit 502 that receives 12 symbols s(1), s(2)...s(12) 504 and uses 3 root codes at SF 4 to place 3 CDMA symbols in each of four different 4-chip intervals which form the 3 SF 4 transmission 424 that is transmitted to the mobile station 406. As can be seen, the base station 402 can transmit 12 symbols 504 in a single 16-chip interval to the mobile station 406 which is similar to what was shown in FIGURE 2 but in this scheme the number of overlapping intra-block symbols are reduced which enables the mobile station 406 to use joint detection or some other non-linear equalization technique to detect the 3 overlapping symbols in each symbol block.

In one embodiment, the present invention is possible in the first place since according to the OVSF code definition in WCDMA, the 4 channelization root codes at SF 4 could be represented as follows:

$$Ch_{4,0}: \{1, \quad 1, \quad 1, \quad 1\}$$
$$Ch_{4,1}: \{1, \quad 1, \quad -1, \quad -1\}$$
$$Ch_{4,2}: \{1, \quad -1, \quad 1, \quad -1\}$$
$$Ch_{4,3}: \{1, \quad -1, \quad -1, \quad 1\}$$

In the above notation, the first subscript indicates the SF and the second subscript indicates the code index (see section 4.3.1.1 of the aforementioned technical specification "3rd Generation Partnership Project: Technical Specification Group Radio Access Network; Spreading and Modulation (FDD)(Release 7)" 3GPP TS 25.213 version 7.3, Sept., 2007).

Each of these root codes can be split into multiple descendant codes at a higher SF. For example, the root code $Ch_{4,3}$ could be split into two descendant codes at SF 8 which are as follows:

$$Ch_{8,6}: \{ Ch_{4,3}, \quad Ch_{4,3}\} = \{1, \quad -1, \quad -1, \quad 1, \quad 1, \quad -1, \quad -1, \quad 1\}$$
$$Ch_{8,7}: \{ Ch_{4,3}, \quad -Ch_{4,3}\} = \{1, \quad -1 \quad -1, \quad 1, \quad -1, \quad 1, \quad 1, \quad -1\}.$$

Similarly, each of the SF 8 codes can be further split into two descendant codes at SF 16 as follows:

$$Ch_{16,2n}: \{Ch_{8,n}, \quad Ch_{8,n}\}$$
$$Ch_{16,2n+1}: \{Ch_{8,n}, \quad -Ch_{8,n}\}.$$

This is how the descendant codes of SF 16 in the traditional HSDPA transmission 106 relate to the root codes at SF 4 or 8 in the HSDPA transmission 424. As an example, the base station 402 may have $Ch_{16,4}$, $Ch_{16,5}$, $Ch_{16,6}$, ..., $Ch_{16,15}$ available to serve the mobile station 406. However, since $Ch_{16,4}$, $Ch_{16,5}$, $Ch_{16,6}$, ..., $Ch_{16,15}$ codes are the complete descendant codes of $Ch_{4,1}$, $Ch_{4,2}$, and $Ch_{4,3}$ this means that the base station 402 can perform step 416 and transmit a HSDPA transmission signal 424 using the 3 SF 4 root codes to the mobile station 406. Of course, the base station 402 needs to first determine if the mobile station 406 is capable of receiving and detecting the HSDPA transmission signal 424 before sending the HSDPA transmission signal 424 to the mobile station 406 (step 416). For instance, such information can be signaled to the base station 402 by the mobile station 406.

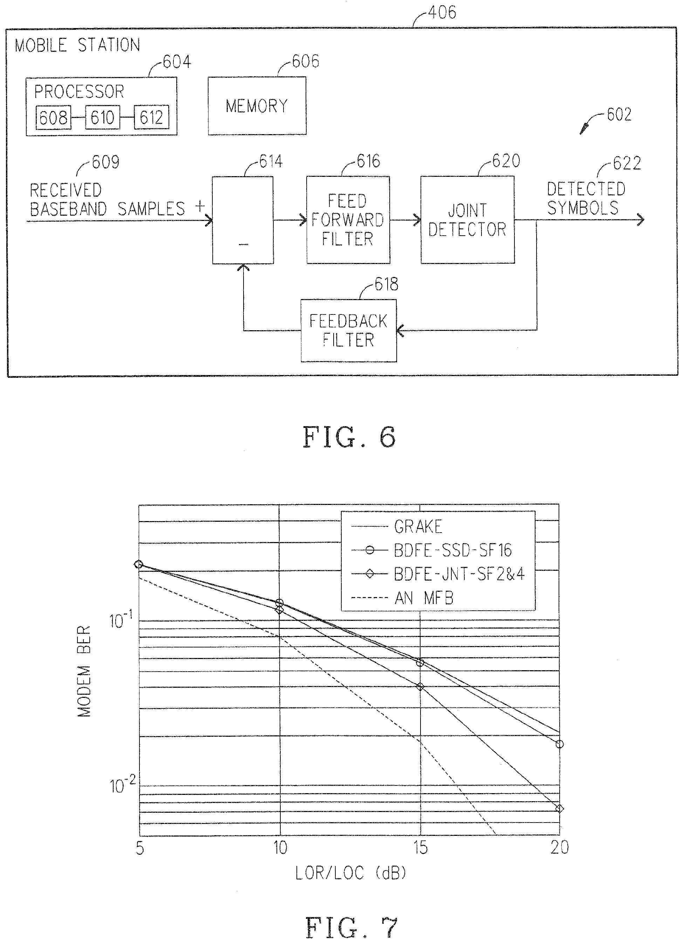

As shown in FIGURE 5, the base station 402 using the 12 SF 16 codes (during step 414) or the 3 root SF 4 codes (during step 416) results in the same number of symbols in a TTI (see also FIGURE 2). Also, as far as impact on other physical channels is concerned, both schemes maintain an orthogonality structure. However, using the 3 root SF 4 codes results in a smaller number of intra-block symbols, as illustrated in FIGURE 5, and thus facilitates the use of joint detection by the mobile station 406. Therefore, when the base station 402 implements step 416 and uses the 3 root SF 4 codes then the mobile station 406 instead of jointly detecting 12 16-QAM or 64-QAM symbols during every 16-chip block now only needs to jointly detect 3 16-QAM or 64-QAM symbols during every 4-chip block. An exemplary mobile station 406 that can jointly detect a HSDPA transmission signal 424 is described next with respect to FIGURE 6.

Referring to FIGURE 6, there is illustrated a block diagram of an exemplary mobile station 406 with an BDFE-JD receiver 602 that is capable of jointly detecting symbols received within the HSDPA transmission signal 424 to help suppress intra-block interference in accordance with an embodiment of the present invention. In this embodiment, the mobile station 406 has a BDFE-JD receiver 602 that includes one or more processors 604 and possibly memory 606 (storage 606) that may include processor-executable instructions where the one or more processors 604 is adapted to interface with the at least one memory 606 and uses hardware circuits or executes the processor-executable instructions to: (a) receive a signal on a control channel (e.g., HS-SCCH) from the base station 402, where the signal indicates a code allocation which is to be used to interact with the base station 402 (step 608); (b) receive baseband samples 609 (corresponding to HSDPA transmission 424) originated by the base station 402 (step 610); and (c) use a root code to detect the baseband samples 609 received from the base station 402 (step 612), if all its descendant codes are allocated according to the control channel (e.g., HS-SCCH) (note: the one or more processors 604 and the possible memory 606 are implemented, at least partially, as a combination of software, firmware, hardware, or hard-coded logic).

In one example, the BDFE-JD receiver 602 can detect the transmitted symbols using a feedforward filter 616, a feedback filter 618, and a joint detector 620. The feedback filter 618 is used to generate the baseband samples according to the detected symbols in previous symbol blocks, which are then subtracted from the received baseband samples using an adder 614. The self-interference from future symbol blocks are suppressed through the feedforward filter 616 using linear equalization and by treating the interference as colored noise. The intra-block interference on the current symbol block is alleviated through joint detection by the joint detector 620. The feedforward filter 616 can be code-specific or code-averaged. More information about an exemplary BDFE can be found in: (1) pending co-assigned U.S. Patent Application Serial Nos. 12/035,846 and 12/058,082 respectively filed on February 22, 2008 and March 28, 2008; and (2) G. E. Bottomley, "Block equalization and generalized MLSE arbitration for the HSPA WCDMA uplink," in Proceedings IEEE Vehicular Technology Conference Fall 2008 (the contents of these documents are incorporated herein by reference) . The latter document also describes generalized MLSE arbitration, another form of joint detection that could be used with lower SF signals.

The inventors have performed simulation tests using a mobile station 406 (with a single antenna BDFE receiver) and a mobile station 406 (with a dual antenna BDFE receiver) to confirm the benefits when the base station 402 implements the root spreading codes based code assignment method 404 and when the corresponding mobile station 406 implements a joint detection technique to detect signals received from the base station 402. In the simulation tests, a comparison was made between current HSDPA transmission 106 (12 codes of SF 16) and the proposed HSDPA transmission 424 (3 codes of SF 4) which serve the scheduled mobile station. An overhead (pilot channel, etc.) of 20% of the total power of the base station 402 was also assumed during the simulation tests.

In the simulation tests, a case 3 channel profile was used which included four chip-spaced paths at delays 0,1,2 and 3 with average relative powers 0, -3, -6 and -9 dB. Independent Rayleigh fading was assumed while 1000 fading realizations were generated and applied to a mini-frame of 50 blocks (each block either 16 chips (old format) or 4 chips (new format)). At the mobile terminal 406, it was assumed that all overhead channels (pilot channel, etc.) had been perfectly subtracted. For G-Rake, a generous finger assignment had been made where the finger delays on a chip-spaced grid had -8 to 10 chip periods which was used to despread 12 SF 16 HSDPA transmissions 126. For the BDFE-JNT receiver which despreads the 3 SF 4 HSDPA transmissions 424, a time-varying, chip-level, code-averaged feedforward filter was used. The processing delays used were the same as for G-Rake. For the feedback filter(s), all past block ISI was subtracted. A simple semi-analytical bound on performance was evaluated as well during the simulation tests.

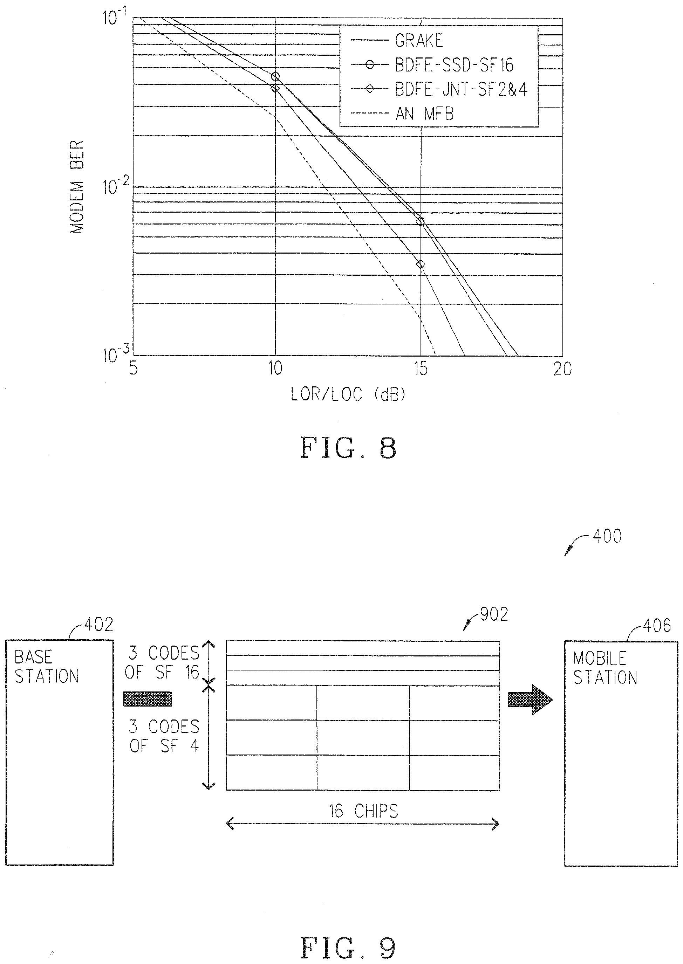

The simulation results for the single-antenna BDFE-JD mobile station 406 and the dual-antenna BDFE-JD mobile station 406 are shown in FIGURES 7 and 8, respectively. It can be seen that though BDFE with symbol-by-symbol detection (bdfe-ssd-SF16) does not improve the performance beyond G-Rake by much, while BDFE with joint detection (bdfe-jnt-SF2&4) offers significant improvement (see Table 1). Note in this case that one root code is SF 2 whereas in the other case the other root code is SF 4. The "grake" corresponds to the generalized receiver performance and "an mfb" corresponds to the matched filter performance bound in FIGURES 7 and 8. The inventors believe that some of the gain is due to the fact that at lower SF, interblock interference is more significant, so that the feedback filter provides more gain while the rest of the gain is from performing joint detection of the 3 16-QAM symbols within a block. These simulation results are for 16-QAM and it is believed that the gains would be higher for 64-QAM.

TABLE 1

| Modem BER | # receive antennas | Gain (dB) |
|-----------|--------------------|-----------| 
| 0.02      | 1                  | 3.0       |
|           | 2                  | 0.8       |
| 0.002     | 2                  | 1.5       |

In view of the foregoing, it can be seen that an allocation of 4 SF 16 codes from the same SF 4 root can be replaced by the root code of SF 4 itself, when the base station 402 can utilize these codes to serve the same HSDPA mobile station 406 . In addition, the base station 402 if desired can replace a pair of SF 16 codes with a SF 8 root when a SF 4 root is not available. Plus, the base station 402 can use a SF 2 root if 8 of the SF 16 codes are from the same SF 2 root. In general, a mix of codes of different spreading factors can be used. If all SF are allowed, then the procedure would be to check if all descendents of the +1 -1 SF2 root code are assigned. If so, these 8 codes would be replaced by the 1 SF2 code and one SF 4 root code +1 +1 -1 -1 would be considered next. If not, then 3 root codes at SF 4 would be considered: +1 +1 -1 -1, +1 -1 +1 -1, and +1 -1 -1 +1. After SF 4, SF 8 root codes would be considered. This would minimize the number of codes used. In other situations, it may be that only root codes of SF 4 are allowed. Furthermore, it should be appreciated that there are also different embodiments associated with the present invention some of which are discussed next with respect to FIGURES 9-10.

Referring to FIGURE 9, there is illustrated an example of a base station 402 using 3 codes of SF 4 (when 12 SF 16 codes can be replaced by the 3 root SF 4 codes without loss of orthogonality to other users) and 3 codes of SF 16 within a HSDPA transmission 902 transmitted to the mobile station 406 in accordance with another embodiment of the present invention. For instance, this embodiment may be implemented when in a high-data-rate reception scenario when the base station 402 has more than 12 SF 16 codes available to serve a HSDPA mobile station 406. In this case, the mobile station's joint detector can be applied to the SF 4 symbols to produce estimates for these symbols while the interference from the SF 16 symbols can be treated as colored noise and suppressed in the feedforward filter. The interference from the SF 4 symbols to the SF 16 symbols can be removed via subtraction before detecting those SF 16 symbols. This type of process is generally known as successive interference cancellation (SIC). If desired, a further iterative process in the form of multistage SIC could be implemented by the mobile station 406 which could further help improve the performance. In this case, the mobile station 406 after detecting the SF 16 symbols would remove their interference prior to detecting the SF 4 symbols for a second time.

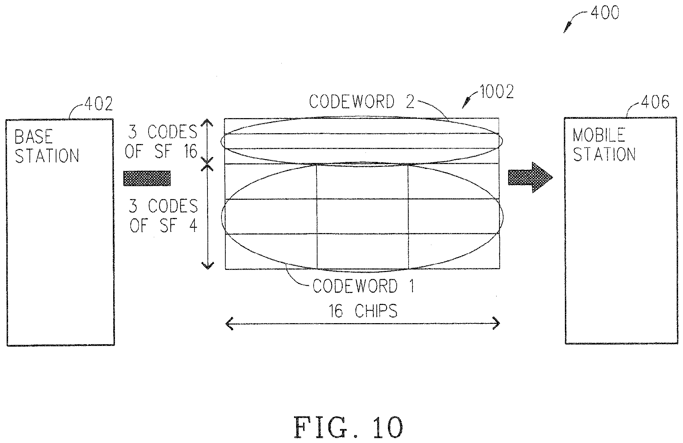

This particular embodiment could be enhanced further, if desired. FIGURE 10 illustrates a scenario where the base station 402 forms separate codewords by having the short symbols (root code SF 4) form codeword 1 and the long symbols (SF 16 descendants) form codeword 2 which are part of an exemplary HSDPA transmission 1002 that is transmitted to the mobile station 406 in accordance with another embodiment of the present invention. Codewords are created using some form of Forward Error Correction (FEC) encoding, such as turbo codes. An error detection code, such as a CRC, is often used as well. This is desirable since when SIC is implemented it is attractive to include the coding gain in signal detection but this particular embodiment would also require a change to the standard. To implement this embodiment, the mobile station 406 could use a BDFE-JD receiver to detect the short symbols and then decode the detected short symbols using a turbo-decoder where the SIC can be performed based on the re-encoded bits. If there is a CRC for each codeword and the CRC checks, then SIC using the hard decisions is performed. Otherwise, the turbo-decoder can further generate soft values to facilitate soft subtraction during the SIC process. After the SIC process, the mobile station 406 may detect and decode the long symbols using a G-Rake receiver or another BDFE-JD receiver.

The present invention also has several other benefits and advantages some of which are as follows (for example).

1. The changing of the spreading factors according to the embodiments described herein does not have any impact on legacy mobile stations being served by the base station 402 at the same time mobile stations 406 are being served.

2. The embodiments described herein do not require any additional per-TTI signalling between the base station 402 and mobile station 406. The scheduled mobile station 406 learns its code allocation (e.g. SF16) from the HS-SCCH, which uses the exact same signaling format as in the past. There only needs to be some initial signaling so that both base station 402 and mobile station 406 understand that groups of SF16 codes will be replaced by root codes when possible. When the mobile station 406 and the base station 402 are conforming to the embodiments described herein then whenever there are four codes of SF=16 allocated from the same root of SF 4, the root SF 4 code will be used instead. For example, the HS-SCCH may signal the following codes are allocated to a scheduled mobile station 406:

$\{Ch_{16,3}, Ch_{16,4}, Ch_{16,5}, Ch_{16,6}, Ch_{16,7}, Ch_{16,8}, Ch_{16,9}, Ch_{16,10}, Ch_{16,11}, Ch_{16,12}, Ch_{16,13}, Ch_{16,14}, Ch_{16,15}\}$.

Then, the base station 402 and mobile station 406 will both agree that the actual channelization codes used are $\{Ch_{16,3}, Ch_{4,1}, Ch_{4,2}, Ch_{4,3}\}$.

3. In the future, if TDM is used to separate pilot, control, and traffic channels, then the base station 402 could use the entire code tree to serve a HSDPA mobile station 406. In this case, the base station 402 could use 4 codes of SF 4, 2 codes of SF 2 or even 1 code of SF 1 (without spreading) to transmit an HSDPA signal to the HSDPA mobile station 406.

Although several embodiments of the present invention have been illustrated in the accompanying Drawings and described in the foregoing Detailed Description, it should be understood that the invention is not limited to the disclosed embodiments, but instead is also capable of numerous rearrangements, modifications and substitutions without departing from the scope of the invention as set forth and defined by the appended claims.

**Claims**

1.  A high-speed downlink packet access transmitter (402) that uses a root spreading code based code assignment to transmit signals (106, 424, 902, 1002) to a receiver (418, 602), the transmitter (402) comprising:

    one or more processors (408) configured to:

    determine whether using root codes is possible based on particular capabilities of the receiver (418, 602);
    checking if all descendants of a root code are assigned to said receiver (418, 602); and
    replacing multiple codes of higher spreading factor descendants with one or more root codes of lower spreading factor descendants.

2.  The high-speed downlink packet access transmitter (402) of claim 1, wherein the one or more processors (408) are further configured to:

    use a mix of codes of different spreading factors.

3.  The high-speed downlink packet access transmitter (402) of claims 1 or 2, wherein the one or more processors (408) are further configured to:

    minimize a number of codes being used.

4.  The transmitter (402) of any of claims 1 - 3, wherein the one or more processors (408) are further configured to:

    check (412) whether a root code of a lower spreading factor, SF, has all of its higher spreading factor descendants assigned to the receiver (418, 602);
    if no, then use (414) the higher spreading factor descendants to transmit symbols to the receiver (418, 602); and
    if yes, then use (416) the root code to transmit the symbols to the receiver (418, 602).

5.  The transmitter (402) of any of claims 1 - 4, wherein the root code and the higher spreading factor descendants both maintain an orthogonality structure.

6.  The transmitter (402) of any of claims 1 - 5, wherein the root code and the higher spreading factor descendants result in a same number of symbols being used in a transmission time interval.

7.  The transmitter (402) of any of claims 1 - 6, wherein the use of the root code results in a smaller number of intra-block symbols being used when compared to a number of intra-block symbols being used by the higher spreading factor descendants.

8.  The transmitter (402) of any of claims 1 - 7, wherein the one or more processors (408) are further configured to execute processor-executable instructions to utilize both the root code and the higher spreading factor descendants from other root codes to serve the receiver (418, 602).

9.  The transmitter (402) of any of claims 1 - 8, wherein the one or more processors (408) are further configured to execute processor-executable instructions to utilize a plurality of higher spreading factor descendants from a first set of root codes to form a first codeword and utilize a second of set of root codes to form a second codeword to serve the receiver (418, 602).

10. The transmitter (402) of any of claims 1 - 9, wherein the one or more processors (408) are further configured to execute processor-executable instructions to use a control channel to signal a code allocation to the receiver (418, 602).

11. The transmitter (402) of any of claims 1 - 10, wherein the one or more processors (408) are further configured to execute processor-executable instructions to use initial signaling to inform the receiver (418, 602) that the higher spreading factor descendants are going to be replaced by the root code when allowed.

12. A method (404) for transmitting symbols to a receiver (418, 602), said method comprising the steps of:

> determining whether using root codes is possible based on particular capabilities of the receiver (418, 602);
> checking if all descendants of a root code are assigned to said receiver (418, 602); and
> replacing multiple codes of higher spreading factor descendants with one or more root codes of lower spreading factor descendants.

13. The method of claim 12 further comprising a step of using a mix of codes of different spreading factors.

14. The method of any of claims 11 - 12 further comprising a step of minimizing a number of codes being used.

15. The method of any of claims 11 - 14 further comprising steps of:

> checking (412) whether a root code of a lower spreading factor, SF, has all of its higher spreading factor descendants assigned to the receiver (418, 602);
> if no, then using (414) the higher spreading factor descendants to transmit symbols to the receiver (418, 602); and
> if yes, then using (416) the root code to transmit the symbols to the receiver (418, 602).

**Patentansprüche**

1. Hochgeschwindigkeits-Downlink-Paketzugriffs-Sender (402), der eine Wurzel-Spreizcode-basierte Codezuweisung verwendet, um Signale (106, 424, 902, 1002) an einen Empfänger (418, 602) zu übertragen, wobei der Sender (402) Folgendes umfasst:

> einen oder mehrere Prozessoren (408), die konfiguriert sind zum:

>> Bestimmen, ob die Verwendung von Wurzel-Codes basierend auf besonderen Fähigkeiten des Empfängers (418, 602) möglich ist;
>> Überprüfen, ob alle Nachkommen eines Wurzel-Codes dem Empfänger (418, 602) zugeordnet sind; und
>> Ersetzen mehrerer Codes von Nachkommen mit höherem Spreizfaktor durch einen oder mehrere Wurzel-Codes von Nachkommen mit niedrigerem Spreizfaktor.

2. Hochgeschwindigkeits-Downlink-Paketzugriffs-Sender (402) nach Anspruch 1, wobei der eine oder die mehreren Prozessoren (408) ferner konfiguriert sind um:

> eine Mischung aus Codes verschiedener Spreizfaktoren zu verwenden.

3. Hochgeschwindigkeits-Downlink-Paketzugriffs-Sender (402) nach Anspruch 1 oder 2, wobei der eine oder die mehreren Prozessoren (408) ferner konfiguriert sind um:

> eine Anzahl der verwendeten Codes zu minimieren.

4. Sender (402) nach einem der Ansprüche 1-3, wobei der eine oder die mehreren Prozessoren (408) ferner konfiguriert sind zum:

> Überprüfen (412), ob ein Wurzel-Code eines niedrigeren Spreizfaktors, SF, alle seine Nachkommen mit höherem Spreizfaktor dem Empfänger (418, 602) zugeordnet hat;
> wenn nein, dann Verwenden (414) der Nachkommen mit dem höheren Spreizfaktor, um Symbole an den Empfänger (418, 602) zu übertragen; und
> wenn ja, dann Verwenden (416) des Wurzel-Codes, um die Symbole an den Empfänger (418, 602) zu übertragen.

5. Sender (402) nach einem der Ansprüche 1-4, wobei sowohl der Wurzel-Code als auch die Nachkommen mit höherem Spreizfaktor eine Orthogonalitätsstruktur beibehalten.

6. Sender (402) nach einem der Ansprüche 1-5, wobei der Wurzel-Code und die Nachkommen mit höherem Spreizfaktor dazu führen, dass eine gleiche Anzahl von Symbolen in einem Übertragungszeitintervall verwendet wird.

7. Sender (402) nach einem der Ansprüche 1-6, wobei die Verwendung des Wurzel-Codes dazu führt, dass eine geringere Anzahl von Intra-Block-Symbolen verwendet wird, verglichen mit einer Anzahl von Intra-Block-Symbolen, die von den Nachkommen mit höherem Spreizfaktor verwendet werden.

8. Sender (402) nach einem der Ansprüche 1-7, wobei der eine oder die mehreren Prozessoren (408) ferner konfiguriert sind, um prozessorausführbare Anweisungen auszuführen, um sowohl den Wurzel-Code als auch die Nachkommen mit höherem Spreizfaktor von anderen Wurzel-Codes zu verwenden, um den Empfänger (418, 602) zu bedienen.

9. Sender (402) nach einem der Ansprüche 1-8, wobei der eine oder die mehreren Prozessoren (408) ferner konfiguriert sind, um prozessorausführbare Anweisungen auszuführen, um eine Vielzahl von Nachkommen mit höherem Spreizfaktor aus einem ersten Satz von Wurzel-Codes zu verwenden, um ein erstes Codewort zu bilden, und einen zweiten Satz von Wurzel-Codes zu verwenden, um ein zweites Codewort zu bilden, um den Empfänger zu bedienen (418, 602).

10. Sender (402) nach einem der Ansprüche 1-9, wobei der eine oder die mehreren Prozessoren (408) ferner konfiguriert sind, um prozessorausführbare Anweisungen auszuführen, um einen Steuerkanal zu verwenden, um eine Codezuordnung an den Empfänger (418, 602) zu signalisieren.

11. Sender (402) nach einem der Ansprüche 1-10, wobei der eine oder die mehreren Prozessoren (408) ferner konfiguriert sind, um prozessorausführbare Anweisungen auszuführen, um die anfängliche Signalisierung dazu zu verwenden, den Empfänger (418, 602) darüber zu informieren, dass die Nachkommen mit höherem Spreizfaktor durch den Wurzel-Code ersetzt werden, wenn dies zulässig ist.

12. Verfahren (404) zum Übertragen von Symbolen an einen Empfänger (418, 602), wobei das Verfahren die folgenden Schritte umfasst:

Bestimmen, ob die Verwendung von Wurzel-Codes basierend auf besonderen Fähigkeiten des Empfängers (418, 602) möglich ist;
Überprüfen, ob alle Nachkommen eines Wurzel-Codes dem Empfänger (418, 602) zugeordnet sind; und
Ersetzen mehrerer Codes von Nachkommen mit höherem Spreizfaktor durch einen oder mehrere Wurzel-Codes von Nachkommen mit niedrigerem Spreizfaktor.

13. Verfahren nach Anspruch 12, ferner umfassend einen Schritt des Verwendens einer Mischung von Codes verschiedener Spreizfaktoren.

14. Verfahren nach einem der Ansprüche 11-12, ferner umfassend einen Schritt des Minimierens einer Anzahl von verwendeten Codes.

15. Verfahren nach einem der Ansprüche 11-14, ferner umfassend die folgenden Schritte:

Überprüfen (412), ob ein Wurzel-Code eines niedrigeren Spreizfaktors, SF, alle seine Nachkommen mit höherem Spreizfaktor dem Empfänger (418, 602) zugeordnet hat;
wenn nein, dann Verwenden (414) der Nachkommen mit höherem Spreizfaktor, um Symbole an den Empfänger (418, 602) zu übertragen; und
wenn ja, dann Verwenden (416) des Wurzel-Codes, um die Symbole an den Empfänger (418, 602) zu übertragen.


**Revendications**

1. Émetteur à accès par paquets en liaison descendante haut débit (402) qui utilise une attribution de code basée sur un code de propagation racine pour transmettre des signaux (106, 424, 902, 1002) à un récepteur (418, 602), l'émetteur (402) comprenant :

un ou plusieurs processeurs (408) configurés pour :

déterminer si l'utilisation de codes racine est possible en fonction de capacités particulières du récepteur (418, 602) ;

vérifier si tous les descendants d'un code racine sont attribués audit récepteur (418, 602) ; et

le remplacement de codes multiples de descendants de facteur de propagation supérieur par un ou plusieurs codes racine de descendants de facteur de propagation inférieur.

2. Émetteur à accès par paquets en liaison descendante haut débit (402) selon la revendication 1, dans lequel les un ou plusieurs processeurs (408) sont en outre configurés pour :

utiliser un mélange de codes de facteurs de propagation différents.

3. Émetteur à accès par paquets en liaison descendante haut débit (402) selon la revendication 1 ou 2, dans lequel les un ou plusieurs processeurs (408) sont en outre configurés pour :

minimiser un nombre de codes utilisés.

4. Émetteur (402) selon l'une quelconque des revendications 1 à 3, dans lequel les un ou plusieurs processeurs (408) sont en outre configurés pour :

vérifier (412) si un code racine d'un facteur de propagation, SF, inférieur a tous ses descendants de facteur de propagation supérieur attribués au récepteur (418, 602) ;

si ce n'est pas le cas, utiliser (414) les descendants de facteur de propagation supérieur pour transmettre des symboles au récepteur (418, 602) ; et

si c'est le cas, utiliser (416) le code racine pour transmettre les symboles au récepteur (418, 602).

5. Émetteur (402) selon l'une quelconque des revendications 1 à 4, dans lequel le code racine et les descendants de facteur de propagation supérieur conservent tous deux une structure d'orthogonalité.

6. Émetteur (402) selon l'une quelconque des revendications 1 à 5, dans lequel le code racine et les descendants de facteur de propagation supérieur entraînent un même nombre de symboles utilisés dans un intervalle de temps de transmission.

7. Émetteur (402) selon l'une quelconque des revendications 1 à 6, dans lequel l'utilisation du code racine a pour conséquence qu'un nombre plus faible de symboles intra-bloc est utilisé par rapport à un nombre de symboles intra-bloc utilisés par les descendants de facteur de propagation supérieur.

8. Émetteur (402) selon l'une quelconque des revendications 1 à 7, dans lequel les un ou plusieurs processeurs (408) sont en outre configurés pour exécuter des instructions exécutables par un processeur pour utiliser à la fois le code racine et les descendants de facteur de propagation supérieur à partir d'autres codes racine afin de desservir le récepteur (418, 602).

9. Émetteur (402) selon l'une quelconque des revendications 1 à 8, dans lequel les un ou plusieurs processeurs (408) sont en outre configurés pour exécuter des instructions exécutables par un processeur pour utiliser une pluralité de descendants de facteur de propagation supérieur à partir d'un premier ensemble de codes racine pour former un premier mot codé et utiliser un second ensemble de codes racine pour former un second mot codé afin de desservir le récepteur (418, 602).

10. Émetteur (402) selon l'une quelconque des revendications 1 à 9, dans lequel les un ou plusieurs processeurs (408) sont en outre configurés pour exécuter des instructions exécutables par un processeur pour utiliser un canal de commande afin de signaler une attribution de code au récepteur (418, 602).

11. Émetteur (402) selon l'une quelconque des revendications 1 à 10, dans lequel les un ou plusieurs processeurs (408) sont en outre configurés pour exécuter des instructions exécutables par un processeur pour utiliser un signalement initial afin d'informer le récepteur (418, 602) que les descendants de facteur de propagation supérieur vont être remplacés par le code racine lorsque cela est autorisé.

12. Procédé (404) de transmission de symboles à un récepteur (418, 602), ledit procédé comprenant les étapes :

de détermination si l'utilisation de codes racine est possible en fonction de capacités particulières du récepteur (418, 602) ;

de vérification si tous les descendants d'un code racine sont attribués audit récepteur (418, 602) ; et

de remplacement des codes multiples de descendants de facteur de propagation supérieur par un ou plusieurs codes racine de descendants de facteur de propagation inférieur.

13. Procédé selon la revendication 12, comprenant en outre une étape d'utilisation d'un mélange de codes de facteurs de propagation différents.

14. Procédé selon l'une quelconque des revendications 11 à 12, comprenant en outre une étape de minimisation d'un nombre de codes utilisés.

15. Procédé selon l'une quelconque des revendications 11 à 14, comprenant en outre les étapes :

de vérification (412) si un code racine d'un facteur de propagation, SF, inférieur a tous ses descendants de facteur de propagation supérieur attribués au récepteur (418, 602) ;

si ce n'est pas le cas, d'utilisation (414) des descendants de facteur de propagation supérieur pour transmettre des symboles au récepteur (418, 602) ; et

si c'est le cas, d'utilisation (416) du code racine pour transmettre les symboles au récepteur (418, 602).

FIG. 1 (PRIOR ART)

FIG. 2 (PRIOR ART)

FIG. 3 (PRIOR ART)

FIG. 4

FIG. 5

EP 2 515 461 B1

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004010591 A2
- WO 2006105333 A1
- US 20060251156 A1
- US 03584608 A
- US 12058082 B

### Non-patent literature cited in the description

- 3rd Generation Partnership Project: Technical Specification Group Radio Access Network; Spreading and Modulation (FDD)(Release 7). *3GPP TS 25.213 version 7.3,* September 2007
- **CHENG R-G et al.** OVSF Code Channel Assignment for IMT-2000. *VTC 2000-Spring, 2000 IEEE 51st. Vehicular Technology Conference Proceedings,* 15 May 2000
- IEEE Vehicular Technology Conference. IEEE, 15 May 2000, vol. 3, 2188-2192
- **G. E. BOTTOMLEY.** Block equalization and generalized MLSE arbitration for the HSPA WCDMA uplink. *Proceedings IEEE Vehicular Technology Conference Fall,* 2008